# EUROPEAN PATENT APPLICATION

(11) **EP 0 679 464 A2**
(43) Date of publication of application: **02.11.1995**
(21) Application number: 95110157.5
(22) Date of filing: 08.10.1993
(51) Int. Cl.: B23B 29/034, B23Q 1/26

(54) **Improved micrometric device for finishing bores**

(30) Priority: 08.10.1992 BR 9204015
(62) Divisional of application: 93308022.8
(71) Applicant: INDUSTRIAS ROMI S.A., BR-13450-00 Santa Barbara d'Oeste - SP (BR)
(72) Inventor: Romi, Giordano, 13450-000 Santa Barbara d-'Oeste - SP (BR)
(74) Representative: Needle, Jacqueline

(57) **Abstract**

A micrometric device (100) for finishing bores has a substantially cylindrical body (108, 134) in which a rotatable micrometric screw (105) is mounted. The longitudinally extending screw (105) is arranged, upon, rotation to cause linear displacement of a tool supporting crossbeam (103). A graduated drum (104) is coaxially mounted with respect to the micrometric screw (105) and connected thereto to rotate the screw which is axially and radially supported with respect to the body of the micrometric device by a support system (106, 109). A cylindrical rod (120) is mounted on an upper threaded extension of the screw (105). The cylindrical rod (120) incorporates at its upper end, an oblique portion or extension (123) extending at an angle (β) relative to the longitudinal axis of the micrometric screw. The oblique extension (123) is received in a recess of the crossbeam (103) which is displaced on guideways and balls (131, 132) such that a radial displacement of the crossbeam is possible.

## Description

The present invention relates to micrometric devices for finishing bores. For example, the invention relates to high precision micrometric devices for finishing through and/or blind bores.

GB-A-2250459 describes a micrometric device for finishing bores comprising a substantially cylindrical, hollow, body, a rotatable micrometric screw extending substantially longitudinally in said body, a tool supporting member, supported by and movable with respect to said body, a tool holder carried by said tool supporting member, and moving means for causing linear movement of said tool supporting member upon rotation of said micrometric screw.

DE-A-1447252 describes a micrometric device for finishing bores comprising a substantially cylindrical, hollow body, a rotatable micrometric screw extending substantially longitudinally in said body, a tool supporting member supported by and movable with respect to said body, a tool holder carried by said tool supporting member, and moving means for causing linear movement of said tool supporting member upon rotation of said micrometric screw, said moving means comprising an elongate rod arranged to be moved linearly upon rotation of said micrometric screw, and having an oblique portion extending at an angle to the longitudinal axis of said rod, said oblique portion being slidably engaged in said tool supporting member such that rotation of said micrometric screw causes displacement of said tool supporting member in a direction substantially perpendicular to the rotational axis of said micrometric screw, wherein said tool supporting member is a movable crossbeam supported on said body to move substantially perpendicularly to the longitudinal axis of said micrometric screw.

The present invention seeks to provide a micrometric device of the type defined in which the displacement of the movable crossbeam is substantially without friction.

According to the present invention a micrometric device is characterised in that movement of said crossbeam relative to said body is guided by four rows of spaced balls arranged to roll along respective facing guideways of said body and said crossbeam, in that each said guideway is arranged to extend substantially perpendicularly to the longitudinal axis of said micrometric screw, and in that the series of balls in the guideways are contained in a substantially trapezoidal perimeter whose vertices are the centre lines of said balls.

As a consequence of its construction, the rigidity of a micrometric device according to an embodiment of the invention is increased, particularly when it rotates at high speeds of operation.

In an embodiment, each guideway of a number of pairs of facing guideways is substantially V-shaped. Additionally, and/or alternatively, each guideway of a number of pairs of facing guideways is substantially plane.

In a preferred embodiment, each said guideway extends substantially horizontally in a respective one of said crossbeam and body, wherein each guideway of two pairs of facing guideways is substantially V-shaped, and each guideway of two further pairs of facing guideways is substantially plane, and wherein each pair of the two pairs of facing substantially V-shaped guideways is arranged to extend substantially parallel to, and at a distance from, a respective pair of the two pairs of facing plane guideways to define the substantially trapezoidal perimeter in which said series of balls is contained.

Preferably, said guideways comprise cuts or grooves provided in upper external walls of said movable crossbeam and in upper internal walls of said upper portion of the micrometric device.

Preferably, the plane guideways are arranged in lower external lateral edges of said movable crossbeam and in lower internal lateral edges of said upper portion of said micrometric device.

Preferably, backlash suppression means are provided to suppress backlash between said movable crossbeam and said oblique portion, said backlash suppression means comprising a bore extending in said crossbeam and opening in a surface thereof, a wedge received in said bore, and pressure means arranged to urge said wedge outwardly of the opening of said bore to abut a side wall of said oblique portion and thereby suppress any mechanical backlash.

The pressure means of said backlash suppression means may comprise a screw arranged to be held in a predetermined position in said bore, and spring means interposed between said screw and said wedge and arranged to urge said wedge outwardly of said bore, and wherein, preferably, said wedge has a trapezoidal section.

Embodiments of the present invention also have a more simplified construction as compared to existing devices. However, this simplification does not cause any kind of impairment to the precision levels attainable with the device.

In an embodiment, said rod of said moving means is a substantially cylindrical rod, wherein upper and lower bushings provided with internal and external threads are arranged substantially coaxially and within the cylindrical rod and in threaded engagement therewith, and wherein an extension of said micrometric screw extends within, and is threadingly engaged with said upper and lower bushings.

The cylindrical rod, lower bushing and upper bushing may together form a single assembly mounted coaxially around an upper portion, or extension, of said micrometric screw.

Preferably, a graduated drum is mounted coaxially relative to said micrometric screw and is coupled thereto such that rotation of said drum rotates said screw, rotation of said drum, and hence of said screw causing linear displacement, in a direction longitudinally of said screw, of an assembly comprising said cylindrical rod and said upper and lower bushings, the resolution of said micrometric screw being substantially equal to the smallest possible displacement of said assembly and being determined by the relationship of the thread pitch of the micrometric screw and the number of divisions of the graduated drum.

The relationship between the thread pitch of the micrometric screw and the number of the divisions of the graduated drum determining the resolution is generally the quotient of the division of the thread pitch by the number of divisions.

The movable crossbeam is arranged to be displaced by said cylindrical rod assembly, and the ratio of the displacement of said movable crossbeam to the displacement of said cylindrical rod and said oblique extension is determined by the angle of inclination between the axis of said cylindrical rod and a geometric axis of said oblique extension together with the resolution of said micrometric screw.

The angle of inclination of said oblique extension may be within a plane that extends substantially parallel to said V-shaped guideways, and said V-shaped guideways extend in a substantially perpendicular direction to the geometric axis of said micrometric screw.

In an embodiment, said body is cylindrical and is provided with side openings such that said graduated drum is manually accessible and manually rotatable.

Said graduated drum may be structured and arranged to receive movement from external actuating means.

Preferably, said movable crossbeam is provided with indented portions on an upper surface thereof such that the tool holder is arranged on said movable crossbeam by aligning said indented portions on said movable crossbeam with indented portions provided on a lower portion of the tool holder, the tool holder being firmly clamped to said movable crossbeam by means of screws.

In an embodiment, said micrometric device further comprises a first cooling duct extending in said body substantially longitudinally thereof, one end of said first cooling duct opening into a cooling chamber, and a second cooling duct extending in said tool supporting member, wherein at least part of said cooling chamber has a circular periphery and is arranged to remain in communication with said second cooling duct irrespective of the position of said tool supporting member relative to said body.

Preferably, said cooling chamber includes a circular recess provided in a surface of said body facing said tool supporting member, and wherein the diameter of said circular recess is equal to or greater than the maximum linear displacement of said tool supporting member relative to said body.

Embodiments of the present invention will hereinafter be described, by way of example, with reference to the accompanying drawings, in which:
Figure 1 is a plan view of a micrometric device for finishing bores, with the tool removed, of the invention;
Figure 2 is a longitudinal section of the micrometric device taken along line A-A of Figure 1;
Figure 2a is an enlarged schematic detail of the micrometric device shown in Figure 2, illustrating part of mechanical elements for converting rotation into linear movement;
Figure 3 is a cross section of the device taken on line B-B of Figure 1;
Figure 4 is a section of the micrometric device taken along line C-C of Figure 2;
Figure 5 shows an enlarged schematic and partially cut longitudinal section of the free end of a graduated drum of the device;
Figure 5a is a front view of a circular face of the free end of the graduated drum, showing a plurality of teeth uniformly displayed around the circular face;
Figure 6 is a partial longitudinal section of an upper portion of the micrometric device showing the support mounting of a cutting tool;
Figure 7 is a longitudinal section of the front portion of the micrometric device taken along line F-F of Figure 6;
Figure 8 is an enlarged longitudinal section of the front portion of the micrometric device with a different tool holder, taken along the line F-F of Figure 6; and
Figure 9 is a front view of the micrometric device taken in the direction of arrow E of Figure 6.

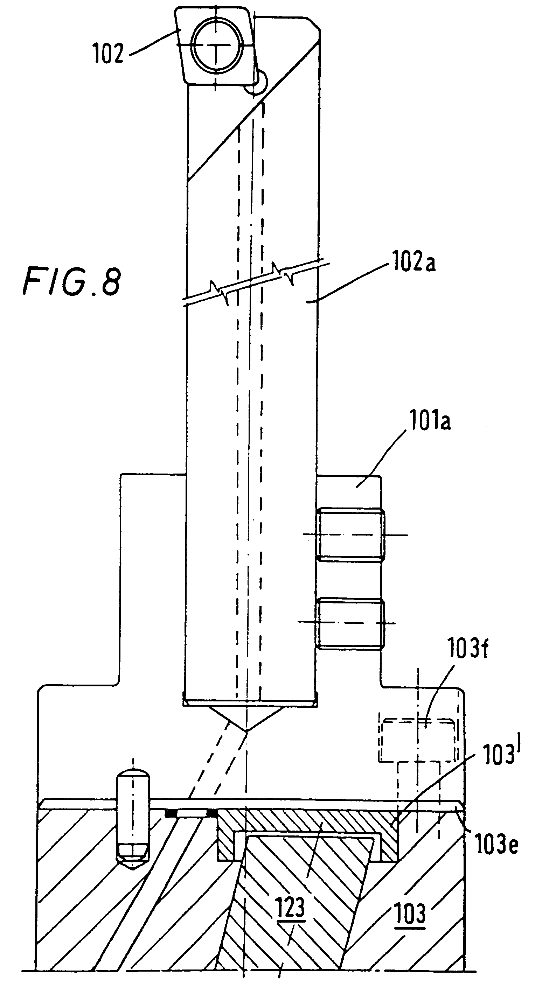

The micrometric device 100 illustrated may be used for finishing both through and blind bores. When a cutting tool 102 is clamped directly onto a tool holder 101, the cutting tool 102 may finish large bores or bores as small as the smallest diameter of a rod extension 102a that holds the cutting tool 102. The clamping of the rod extension 102a on a tool holder 101a is clearly shown in Figure 8.

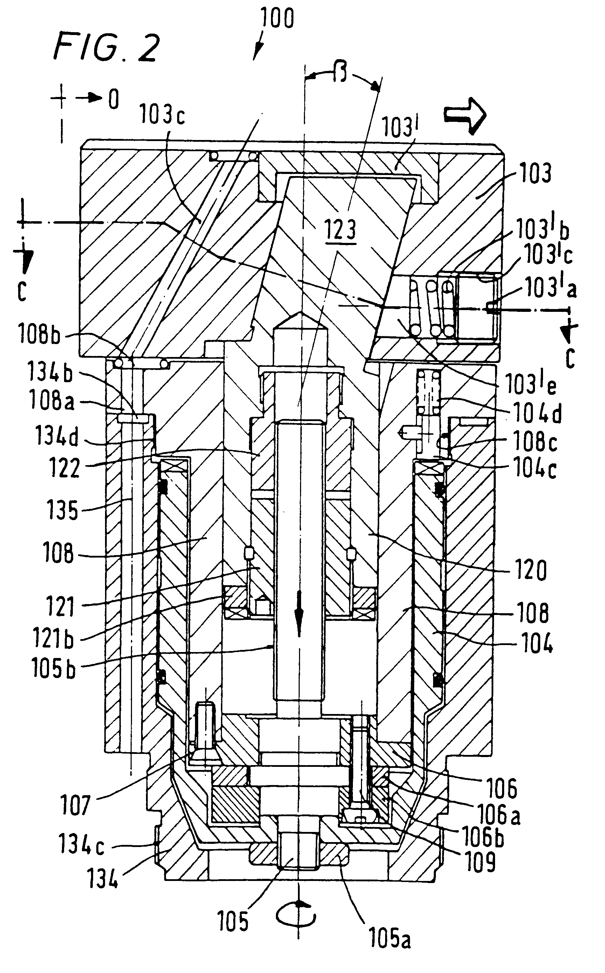

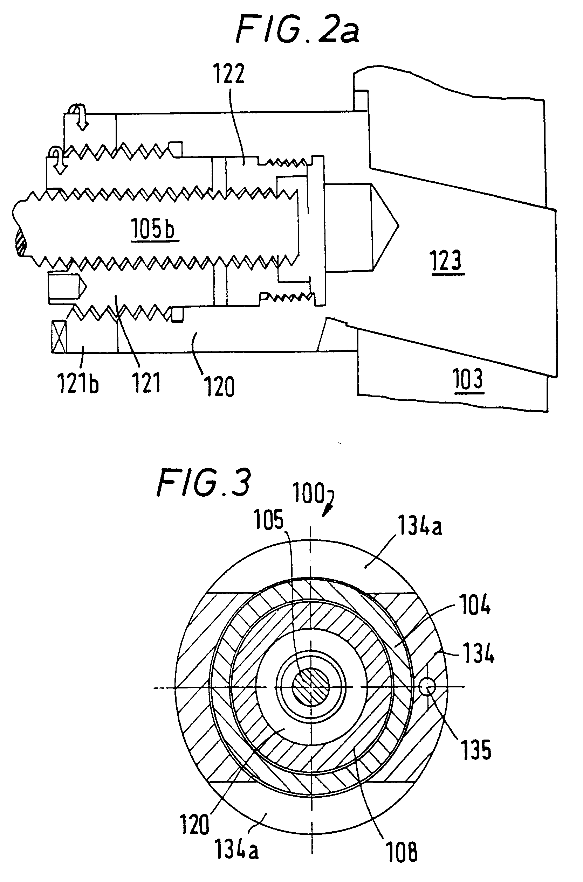

From the outset, the concept of active and passive thread flanks of screws, internal and/or external threaded bushings, and other mechanical threaded elements should be taken into consideration and defined. The term "active flank" of a thread denotes a flank of a thread that interacts with one of the flanks of another thread such that the two flanks are kept in contact with each other. The term "passive flank" of a thread denotes the flank of a thread that is opposite and adjacent to a corresponding active flank. Between two such passive flanks, there is clearance. Figure 2a shows the condition and construction of active and passive flanks as explained above.

The micrometric device 100 is provided with a movement transmission mechanism which comprises a graduated drum 104 coaxially and jointly mounted around a micrometric screw 105. In this manner, rotation of the drum 104 is arranged to cause rotation of the micrometric screw 105.

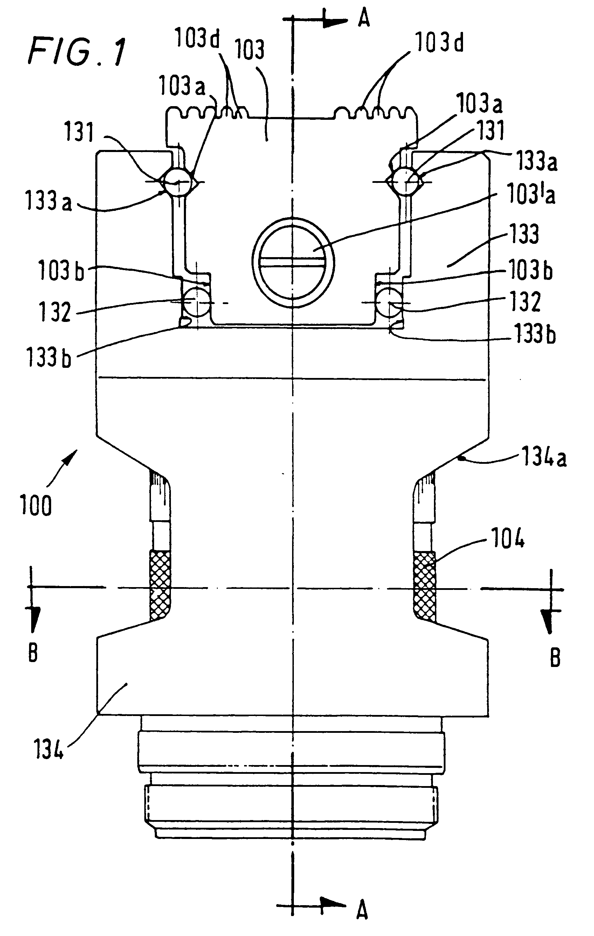

Micrometric screw 105 is axially maintained and radially supported in relation to the body of the micrometric device 100 by way of a support system comprising a plurality of rings 106, 106a and 106b, which are held together by fastening screws 109. The support system itself is held, by fastening screws 107, to a substantially cylindrical and hollow internal body 108 as shown in Figure 2. This internal body 108 is part of the body of the micrometric device. The body member 108 is held together and coaxially held to an external complementary cylindrical body 134 by the interengagement of an external thread 108c of the body 108 with an internal thread 134d of the external body 134. The complementary cylinder 134, graduated drum 104 and cylinder 108 form a single assembly which is mounted coaxially around the micrometric screw 105, as shown in Figures 1, 2 and 3.

At the extreme bottom end of the micrometric screw 105, a nut 105a is provided for holding the graduated drum 104 close to the micrometric screw 105. At it's upper end, the micrometric screw 105 has an upper extension which is within cylindrical body 108. The upper extension has a thread 105b which coaxially trespasses through a lower bushing 121 and an upper bushing 122. Both of these bushings 121, 122 are provided with internal and external threads which in turn trespass coaxially through a cylindrical rod 120 which is slidably lodged inside a coaxial hole of the internal cylindrical body 108. The cylindrical rod 120 is also preferably provided with a threaded portion which engages the external threads of both the lower bushing 121 and the upper bushing 122. A threaded locking ring 121b is provided to prevent the lower bushing 121 from being moved after it has been adjusted for zero backlash.

The cylindrical rod 120, together with the lower bushing 121 and the upper bushing 122, comprise a single assembly coaxially mounted around the upper portion, or extension, of the micrometric screw 105 and arranged inside the internal cylindrical body 108 as shown in Figure 2. The cylindrical rod 120 incorporates, at its uppermost end, an oblique portion or extension 123 whose geometric axis is off-set at an angle β relative to a longitudinal or geometric axis of the micrometric screw 105. In this manner, rotation of the graduated drum 104 is transmitted to the micrometric screw 105 and then converted into linear movement of the cylindrical rod 120 substantially in the longitudinal direction of the rod 120. In turn, the linear movement of the cylindrical rod 120 causes the oblique extension 123 to displace a movable crossbeam 103 arranged to extend substantially perpendicularly to the geometric axis of the micrometric screw 105 thus making possible a radial displacement of tool holders 101 or 101a.

During the conversion of the rotating movement of the graduated drum 104, and closely connected micrometric screw 105, into linear movement of the cylindrical rod 120, it is important to take cognisance of the resolution of the micrometric screw 105. This resolution is defined as being equal to the smallest possible displacement of the cylindrical rod 120. This displacement is generally equal to the quotient of the division of the thread pitch of the micrometric screw 105 by the number of lines (divisions) of the graduated drum 104.

The radial displacement of the movable crossbeam 103 is caused by longitudinal displacement of the oblique extension 123 of the cylindrical rod 120. The amount of radial displacement of the crossbeam 103 is a function of the resolution of the micrometric screw 105 and also of the tangent of the angle β, where tan β is the radial displacement of the movable crossbeam 103/longitudinal displacement of the extension 123.

As can be seen in Figures 1, 2 and 6, the movable crossbeam 103 operates as a support base for the tool holder 101 and moves on an upper portion of the micrometric device 100. The movement of the crossbeam 103 is guided by substantially horizontally extending, substantially V-shaped cuts or grooves 103a and 133a provided on upper external walls of the movable crossbeam 103 and on the upper internal portion of the upper portion 133 of the micrometric device 100. Balls 131 are arranged in these grooves. Further balls 132 are arranged between plane guideways formed by lower external lateral edges 103b of the movable crossbeam 103 and plane guideways formed by lower internal lateral edges 133b of the upper portion 133 of the body of the micrometric device 100. The balls 131, 132 in their respective guideways enable displacement of the movable crossbeam 103, in a direction substantially perpendicular to the geometric axis of the micrometric screw 105, relative to the upper body 133 and ensure that the displacement is achieved substantially without backlash and without friction.

The substantially horizontally extending V-shaped guideways that receive the balls 131, and the plane guideways that lodge the balls 132, extend substantially parallel and at a distance from each other in the direction of a perpendicular plane passing through the geometric axis of the micrometric screw 105. The axis of the micrometric screw 105 is coaxial to the axis of micrometric device 100. This arrangement of the guideways provides for a displacement of the movable crossbeam 103 in a substantially perpendicular direction to the geometric axis of the micrometric screw 105. As a result, the tool holder 101 or 101a is displaced in a radial direction of the micrometric device 100.

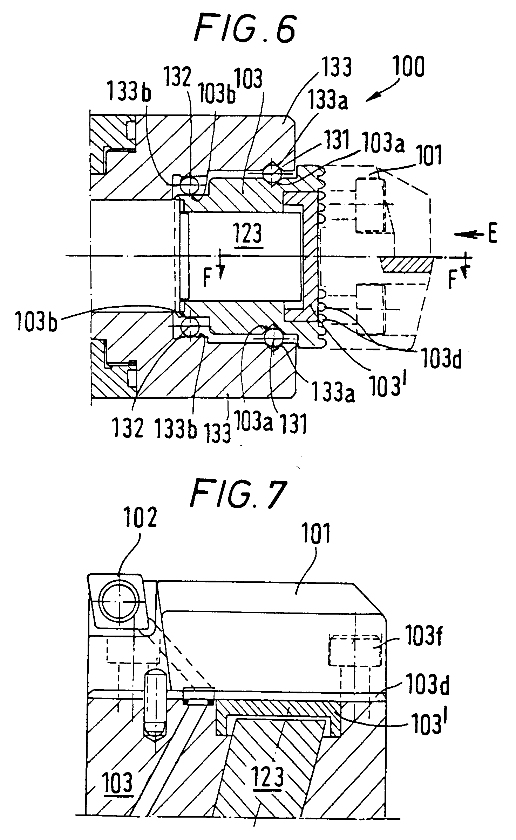

Figures 1 and 6 also illustrate that balls 131 and 132 are held in a substantially trapezoidal perimeter in which the vertices are the centres of the balls. This arrangement provides maximum stability for the movable crossbeam 103 and ensures against any tendency of rotation relative to a plane extending substantially perpendicularly to the guideways that lodge the balls.

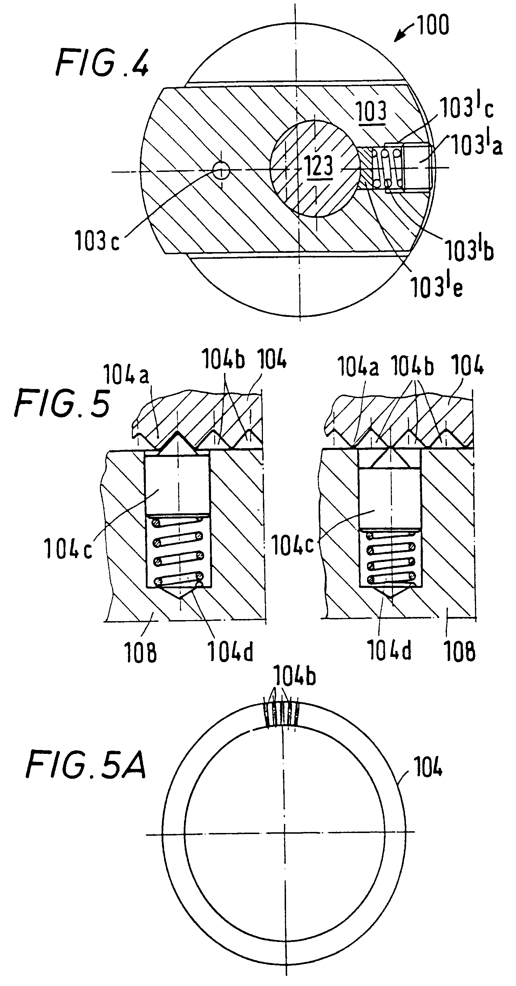

As shown in Figures 2, 5 and 5a, a free end of the graduated drum 104 is provided with a plurality of teeth 104a and empty spaces 104b on which at least one pair of locating pins 104c actuate. A free end of each of the pins 104c is compelled to be engaged either in the empty space 104b between any of two teeth 104a, or over the crest of any of the teeth 104a.

From the above description, and as illustrated in Figures 2, 5 and 5a, the action of the springs 104d on the pins 104c establishes a condition of resilient pressure in order that pins 104c actuate and exert an effective function as locators for the graduated drum 104.

As can be seen in Figures 1 and 3, manual access to the drum 104 is achieved through side openings 134a arranged on the external complementary cylindrical body 134. This arrangement permits manual rotation of the graduated drum 104. Rotation of the drum 104 may also be made through several non-manual external means (not shown). In these cases, a drum which is suitable for receiving movement from the external actuating means is used.

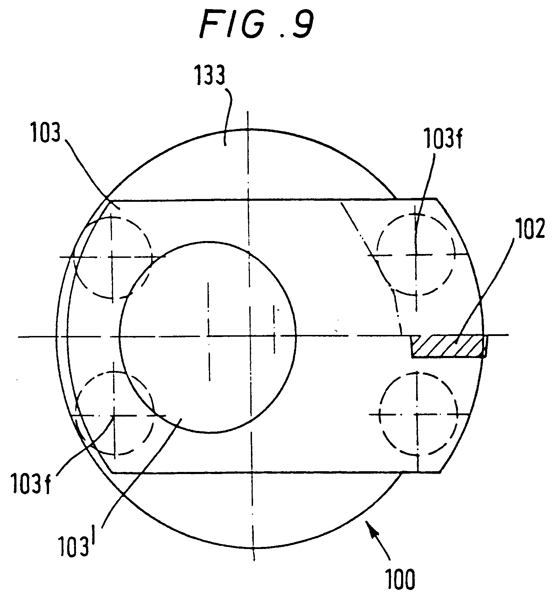

The clamping of the tool holders 101 and 101a on the movable crossbeam 103 is by juxtaposition of an indented portion 103d existing at the upper surface of the moveable crossbeam 103, and indented portions which are present respectively at the lower portion of the tool holders 101 and 101a. This clamping is accomplished through screws 103f as shown in Figures 7, 8 and 9.

As can be seen in Figures 2 and 4, the movable crossbeam 103 is provided with a threaded bore 103'c arranged to extend substantially perpendicularly to the geometric axis of the micrometric device 100. The bore 103'c lodges a screw 103'a which exerts pressure on a spring 103'b which in turn compresses a wedge 103'e. The compression of the wedge 103'e causes compression of the cylindrical surface of the extension 123. In this manner, any backlash that may exist between the cylindrical rod 120 and the cylindrical body 108 and/or between the movable crossbeam 103 and the extension 123 is suppressed.

A cooling duct 135 is provided inside the cylindrical wall of the complementary external body 134 of the micrometric device 100. This cooling duct 135 is arranged to extend substantially longitudinally to the external body 134 and ends at a circular chamber 134b provided on top of the upper end of the external body 134. The circular chamber 134b communicates with a cooling duct 103c provided on the movable crossbeam 103 through a hole 108a connected to a circular recess 108b orthogonally provided on the peripheral edge of the internal cylindrical body 108 of the micrometric device 100 as shown in Figure 2.

With this arrangement, the cooling duct 135, the chamber 134b and ducts 108a, 108b and 103c and those ducts existing on tool holders 101 and 101a (shown with dotted lines in Figures 7 and 8), provide effective cooling of the cutting tool 102 during a machining operation assuming that proper cooling fluid is conducted through the ducts and chambers.

The diameter of the circular recess 108b is slightly larger than the total cross displacement of the movable crossbeam 103 so that there is always communication for cutting fluid between the lower portion of the cylindrical body 108 and the movable crossbeam 103 that supports the tool holders 101 and 101a and the respective cutting tool 102.

A disc type cover 103' is adjusted in the upper face of the crossbeam 103 and prevents metal and liquid impurities from entering into the space occupied by the oblique extension 123 in order to avoid any possible damage to the elements of the device.

It will be appreciated that modifications and variations may be made to the device as described and illustrated within the scope of the appended claims.

## Claims

1. A micrometric device (100) for finishing bores comprising a substantially cylindrical, hollow body, a rotatable micrometric screw (105) extending substantially longitudinally in said body, a tool supporting member (103) supported by and movable with respect to said body, a tool holder (101, 101a) carried by said tool supporting member (103), and moving means (120, 123) for causing linear movement of said tool supporting member (103) upon rotation of said micrometric screw (105), said moving means (120, 123) comprising an elongate rod (120) arranged to be moved linearly upon rotation of said micrometric screw (105), and having an oblique portion (123) extending at an angle (β) to the longitudinal axis of said rod (120), said oblique portion (123) being slidably engaged in said tool supporting member (103) such that rotation of said micrometric screw (105) causes displacement of said tool supporting member (103) in a direction substantially perpendicular to the rotational axis of said micrometric screw, wherein said tool supporting member (103) is a movable crossbeam (103) supported on said body to move substantially perpendicularly to the longitudinal axis of said micrometric screw (105), characterised in that movement of said crossbeam (103) relative to said body is guided by four rows of spaced balls (131, 132) arranged to roll along respective facing guideways (103a, 133a; 103b, 133b) of said body and said crossbeam, in that each said guideway is arranged to extend substantially perpendicularly to the longitudinal axis of said micrometric screw (105), and in that the series of balls (131, 132) in the guideways are contained in a substantially trapezoidal perimeter whose vertices are the centre lines of said balls (131, 132).

2. A micrometric device as claimed in claim 1, wherein each guideway (103a, 133a) of a number of pairs of facing guideways is substantially V-shaped.

3. A micrometric device as claimed in claim 1 or claim 2, wherein each guideway (103b, 133b) of a number of pairs of facing guideways is substantially plane.

4. A micrometric device as claimed in any preceding claim, wherein each said guideway (103a, 133a; 103b, 133b) extends substantially horizontally in a respective one of said crossbeam (103) and body, wherein each guideway (103a, 133a) of two pairs of facing guideways is substantially V-shaped, and each guideway (103b, 133b) of two further pairs of facing guideways is substantially plane, and wherein each pair of the two pairs of facing substantially V-shaped guideways (103a, 133a) is arranged to extend substantially parallel to, and at a distance from, a respective pair of the two pairs of facing plane guideways (103b, 133b) to define the substantially trapezoidal perimeter in which said series of balls (131, 132) is contained.

5. A micrometric device (100) as claimed in any preceding claim, wherein backlash suppression means are provided to suppress backlash between said movable crossbeam (103) and said oblique portion (123), said backlash suppression means comprising a bore (103'c) extending in said crossbeam (103) and opening in a surface thereof, a wedge (103'e) received in said bore (103'c), and pressure means (103'a, 103'b) arranged to urge said wedge (103'e) outwardly of the opening of said bore (103'c) to abut a side wall of said oblique portion (123) and thereby suppress any mechanical backlash.

6. A micrometric device as claimed in Claim 5, wherein the pressure means (103'a, 103'b) of said backlash suppression means comprises a screw (103'a) arranged to be held in a predetermined position in said bore (103'c), and spring means (103'b) interposed between said screw (103'a) and said wedge (103'e) and arranged to urge said wedge (103'e) outwardly of said bore (103'c).

7. A micrometric device as claimed in any preceding claim, further comprising a first cooling duct (135) extending in said body substantially longitudinally thereof, one end of said first cooling duct (135) opening into a cooling chamber (108a, 108b, 134b), and a second cooling duct (103c) extending in said tool supporting member (103), wherein at least part of said cooling chamber (108a, 108b, 134b) has a circular periphery and is arranged to remain in communication with said second cooling duct (103c) irrespective of the position of said movable crossbeam (103) relative to said body.

8. A micrometric device as claimed in Claim 7, wherein said cooling chamber (108a, 108b, 134b) includes a circular recess (108b) provided in a surface of said body facing said movable crossbeam (103), and wherein the diameter of said circular recess (108b) is equal to or greater than the maximum linear displacement of said movable crossbeam (103) relative to said body.
